# DEMANDE DE BREVET EUROPEEN

(11) **EP 1 323 969 A2**
(43) Date de publication de la demande: **02.07.2003**
(21) Numéro de dépôt: 02293020.0
(22) Date de dépôt: 06.12.2002
(51) Int. Cl.: F16L 3/08, F16L 3/16, F16L 55/033

(54) **Dispositif de fixation d'un flexible entre des éléments mobiles et système de suspension d'une roue associé**

(30) Priorité: 06.12.2001 FR 0115789
(71) Demandeur: Renault s.a.s., 92100 Boulogne Billancourt (FR)
(72) Inventeur: Boisseau, Nicolas, 91300 Massy (FR); Jan, Michel, 75015 Paris (FR)

(57) **Abrégé**

Un dispositif de fixation (22) d'un flexible (21) entre des premier et second éléments mobiles l'un par rapport à l'autre, une première extrémité du flexible étant solidaire du premier élément et une seconde extrémité du flexible étant solidaire du second élément, comprend un support de fixation (24) du dispositif sur le premier élément et un moyen de fixation souple (26, 28) d'une portion intermédiaire du flexible sur le premier élément, porté par le support (24) et possédant au moins un degré de liberté.

## Description

La présente invention concerne un dispositif de fixation d'un flexible entre deux éléments mobiles l'un part rapport à l'autre, le dispositif étant adapté en particulier pour la fixation d'un flexible d'alimentation en liquide de frein disposé entre un organe de freinage correspondant et le châssis d'un véhicule. Elle concerne également un système de suspension équipé d'un tel dispositif de fixation.

Afin d'assurer le confort de roulage et la tenue de route des véhicules automobiles, les roues des véhicules sont généralement fixées au châssis du véhicule par l'intermédiaire de dispositifs de suspension permettant des mouvements de débattement des roues. Les changements de direction des véhicules sont provoqués par rotation des roues directrices du véhicule selon un axe sensiblement vertical. Par ailleurs, les véhicules comprennent généralement des dispositifs de freinage par friction dans lesquels une garniture fixe est pressée au moyen d'un liquide de frein sous pression contre un disque ou un tambour solidaire en rotation de la roue.

Le dispositif de freinage est généralement alimenté en liquide de frein depuis un réservoir de liquide de frein commun à plusieurs roues et solidaire du châssis, par l'intermédiaire d'un flexible. Le flexible est donc disposé entre des éléments mobiles l'un par rapport à l'autre, solidaires respectivement du châssis et de la roue. Le flexible est souple et possède une longueur suffisante afin d'accompagner les mouvements de suspension et éventuellement de direction de la roue.

Lors des mouvements de la roue, le flexible est soumis à des contraintes internes, avec une concentration de contraintes à proximité des points de fixation du flexible sur l'ensemble mobile de fixation de la roue. Compte tenu des mouvements permanents de la roue par rapport au châssis, ces contraintes internes concentrées peuvent provoquer une fatigue rapide du flexible, de sorte que le flexible doit être changé lors d'une opération de maintenance, afin de prévenir une rupture éventuelle qui rendrait inopérant le dispositif de freinage du véhicule.

La présente invention propose un dispositif de fixation d'un flexible entre des éléments mobiles permettant de limiter le mouvement du flexible, tout en limitant les contraintes internes concentrées dans le flexible lors de mouvements des éléments mobiles.

L'invention propose également un dispositif de fixation d'un flexible entre deux éléments mobiles simple et pouvant être obtenu à faible coût de fabrication.

Un tel dispositif de fixation d'un flexible entre des premier et second éléments mobiles l'un par rapport à l'autre, dans lequel une première extrémité du flexible est solidaire du premier élément et une seconde extrémité du flexible est solidaire du second élément, comprend un support de fixation du dispositif sur le premier élément et un moyen de fixation souple d'une portion intermédiaire du flexible sur le premier élément, porté par le support et possédant au moins un degré de liberté.

La fixation d'une portion intermédiaire du flexible sur le premier élément mobile permet de limiter les mouvements du flexible, afin qu'il ne heurte pas d'éventuels éléments adjacents. La fixation d'une portion intermédiaire à l'aide d'un moyen de fixation possédant un ou plusieurs degrés de liberté permet des mouvements du flexible par rapport au moyen de fixation ou par rapport au premier élément, de façon que lors des mouvements relatifs des premiers et seconds éléments, le flexible adopte une position limitant la concentration de contraintes internes dans le flexible. L'usure du flexible est ainsi limitée, ce qui permet d'augmenter sa durée de vie. Dans le cas d'un véhicule automobile et selon les conditions d'utilisation du véhicule, telles que les conditions climatiques, le flexible peut éventuellement rester inchangé pendant toute la durée de vie du véhicule.

Selon un mode de réalisation, le moyen de fixation permet une rotation du flexible par rapport au dispositif de fixation selon au moins un axe de rotation. Par exemple le moyen de fixation peut être du type rotule. Dans ce cas, un mode de réalisation possible est que le moyen de fixation comprend une rotule moulée sur le flexible et un logement de rotule.

Selon un mode de réalisation, le moyen de fixation comprend une cage tubulaire et un manchon souple fixé dans la cage et adapté pour maintenir une portion intermédiaire du flexible de façon souple dans une position sensiblement centrale de la cage tubulaire, tout en autorisant des mouvements de translation et de rotation du flexible par rapport à la cage. Le manchon peut comprendre une paroi pourvue de trous longitudinaux pour diminuer sa rigidité.

Selon un mode de réalisation, le moyen de fixation comprend une cage tubulaire et une pluralité de projections radiales élastiques s'étendant vers l'intérieur à partir de la cage vers le flexible et adaptées pour maintenir une portion intermédiaire de ce dernier de façon souple dans une position sensiblement centrale de la cage tubulaire, tout en autorisant des mouvements de translation et de rotation du flexible par rapport à la cage.

Avantageusement, le support de fixation est un collier de serrage sur le premier élément. Un tel support de fixation est adapté dans le cas où le premier élément est un organe tubulaire tel qu'un élément d'un amortisseur d'une jambe de suspension solidaire de la roue.

Le dispositif de fixation est adapté pour un système de suspension d'une roue sur le châssis d'un véhicule automobile, comprenant un combiné ressort/amortisseur disposé entre la roue et le châssis dudit véhicule, un organe de freinage de la roue alimenté en liquide de freinage par l'intermédiaire d'un flexible dont une première extrémité est solidaire de l'organe de freinage, une seconde extrémité étant solidaire du châssis du véhicule.

La présente invention et ses avantages seront mieux compris à l'étude de la description détaillée de modes de réalisations pris à titre d'exemple non-limitatifs et illustrée par les dessins annexés, sur lesquels :
- la figure 1 illustre schématiquement et de façon partielle un système de suspension d'une roue sur un véhicule automobile ;
- la figure 2 est une vue de côté d'un dispositif de fixation selon un aspect de l'invention ;
- la figure 3 est une vue de dessus partielle du dispositif selon la figure 2 ;
- la figure 4 est une vue de côté d'une variante du dispositif de fixation selon un aspect de l'invention ;
- la figure 5 est une vue de dessus partielle du dispositif selon la figure 4 ;
- la figure 6 est une vue de côté d'une seconde variante du dispositif de fixation selon un aspect de l'invention ; et
- la figure 7 est une vue de dessus partielle du dispositif selon la figure 6 ;

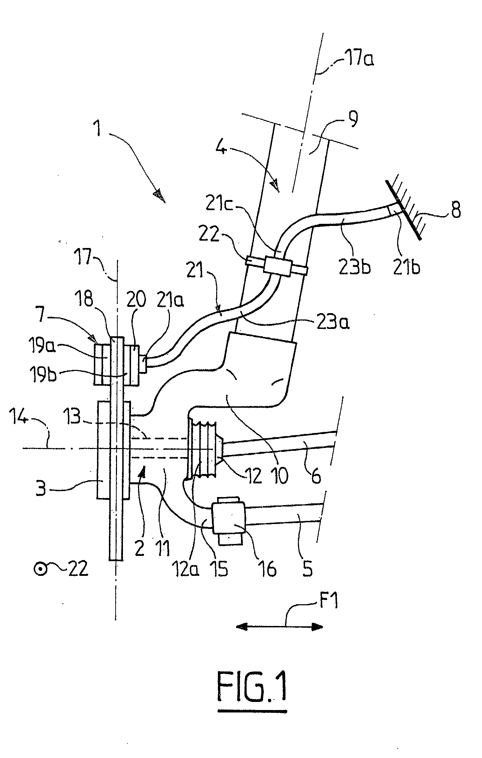

Sur la figure 1, un système de suspension référencé 1 dans son ensemble, du type à jambe de force, comprend un moyeu 2, sur lequel sont montés une fusée 3, un amortisseur de suspension 4, une biellette de direction 5, un arbre d'entraînement 6 et un organe de freinage 7.

L'amortisseur de suspension 4, la biellette de direction 5 et l'arbre d'entraînement 6 sont représentés partiellement pour des raisons de clarté du dessin. La biellette de direction 5 est reliée à un système de direction non représenté. L'arbre d'entraînement 6 est relié à un arbre de sortie d'un système d'entraînement non représenté. L'amortisseur de suspension 4 est relié au châssis du véhicule par l'intermédiaire d'une butée de suspension non représentée.

Le moyeu 2 comprend un corps central cylindrique 11, un bras 10 s'étendant à partir du corps central 11, axialement d'un premier côté, et un second bras 15 s'étendant vers le premier côté et portant à une extrémité libre une rotule 16 décalée dans une direction perpendiculaire à la figure. L'amortisseur de suspension 4 comprend une jambe 9 solidaire du bras 10 du moyeu 2.

L'arbre d'entraînement 6 se situe du premier côté du moyeu 2 en étant relié à la fusée 3 par l'intermédiaire d'une liaison 12 du type joint de cardant et un axe de transmission 13. L'extrémité opposée de l'arbre d'entraînement 6 est reliée de façon connue à un arbre de sortie d'un système d'entraînement par l'intermédiaire d'une seconde liaison du type joint de cardan non représentée. La fusée 3 se situe du côté du moyeu 2 opposé à l'arbre d'entraînement 6. L'axe de transmission 13 traverse le corps central 11 du moyeu 2. La liaison 12 est protégée contre la pollution par un soufflet 12a. La fusée 3 est montée à rotation sur le moyeu 2 selon un axe de rotation 14 qui est l'axe principal de l'axe de transmission 13. L'arbre d'entraînement 6 permet l'entraînement en rotation d'une roue fixée sur la fusée 3, selon l'axe 14.

La biellette de direction 5 est reliée au bras 15 du moyeu 2 par l'intermédiaire de la rotule 16. La biellette de direction 5 permet d'orienter la fusée 3 et une roue fixée sur la fusée 3, pour provoquer un changement de direction du véhicule. Un déplacement de la biellette de direction 5 selon la direction indiquée par la flèche F1, sensiblement dans le plan de la figure, permet de provoquer une rotation de la fusée 3 autour d'un axe 17 sensiblement vertical, orienté de haut en bas et dans le plan de la figure.

Lors des mouvements de suspension, et selon les mouvements cinématiques autorisés par le système de suspension 1, la fusée 3 peut adopter par rapport au châssis des mouvements de translation selon les axes 14, 17 et un troisième axe 22 perpendiculaire à la fois aux axes 14 et 17, combiné avec des mouvements de rotation selon les axes 14, 17 et 22.

L'arbre de transmission 6 et la liaison 12 d'une part, et la biellette de direction 5 et la rotule 16 d'autre part sont adaptées respectivement pour entraîner la rotation de la fusée 3 selon l'axe 14 et pour permettre de provoquer l'orientation d'une roue fixée sur la fusée 3, et ce malgré les mouvements de suspension de la fusée 3 par rapport au châssis du véhicule.

L'amortisseur de suspension 4 permet d'amortir les mouvements de la fusée 3 et de maintenir un contact satisfaisant entre une roue fixée sur la fusée 3 et un revêtement de route. La jambe 9 de l'amortisseur de suspension possède un mouvement de translation d'axe principal sensiblement colinéaire à l'axe 17, en étant généralement incliné, comme l'axe 17a, de façon connue dans les systèmes de suspension à jambe de force.

L'organe de freinage 7 comprend un disque 18 solidaire de la fusée 3 et des garnitures 19a, 19b solidaires du moyeu 2 de façon non représentée et lesdites garnitures 19a, 19b étant destinées à être pressées en contact de frottement avec le disque 18 pour freiner la rotation de la fusée 3 selon l'axe de rotation 14. Un actionneur 20 alimenté en liquide de frein sous pression par un flexible 21 permet d'exercer l'effort de pression des garnitures 19a, 19b sur le disque 18. La présence de garnitures de chaque côté du disque 18 permet une symétrie des efforts de friction exercés sur le disque 18.

Le flexible 21 comprend une première extrémité 21a fixée sur l'actionneur 20, une seconde extrémité 21b fixée sur une paroi 8 du châssis représentée fixe et une portion intermédiaire 21c, fixée sur la jambe 9 par l'intermédiaire d'un dispositif de fixation 22. Comme la jambe 9 est solidaire du moyeu 2, la jambe 9 et l'actionneur 20 sont fixes l'un par rapport à l'autre. Par contre, la jambe 9 est mobile par rapport au châssis et à l'extrémité 21b du flexible 21 fixée sur la paroi 8 du châssis. On désigne par portion statique 23a la portion de flexible 21 située entre la première extrémité 21a et la portion intermédiaire 21c et par portion dynamique 23b la portion du flexible 21 située entre la seconde extrémité 21b et la portion intermédiaire 21c.

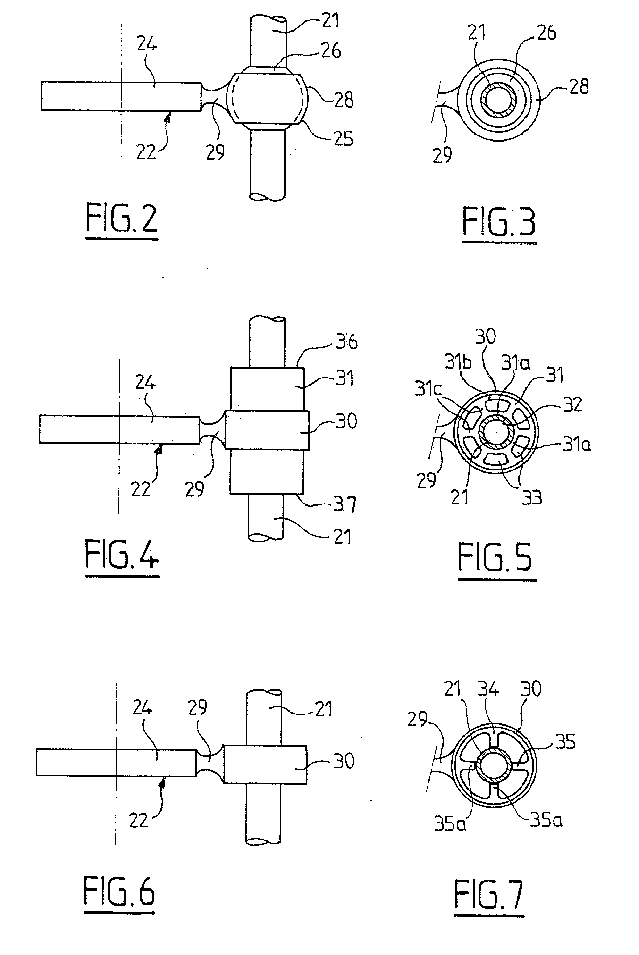

En référence aux figures 2 et 3, un dispositif de fixation 22 comprend un support de fixation 24 sur la jambe 9 et un moyen de fixation 25 de la portion intermédiaire du flexible 21c avec des degrés de liberté.

Le support de fixation 24 est ici du type collier de fixation pour permettre la fixation du dispositif 22 autour de la jambe 9. Bien entendu, on peut utiliser comme support de fixation 24 tout support de fixation connu et adapté pour la fixation du moyen de fixation 25, selon l'élément mobile de support du dispositif de fixation 22.

Le moyen de fixation 25 comprend une rotule 26 solidaire du flexible 21 qui passe à travers un alésage de la rotule 26. La rotule 26 est disposée dans une cage 28 qui est un anneau sphérique résultat d'un sectionnement d'une sphère selon deux plan parallèles situés de part et d'autre du centre de ladite sphère. La cage 28 forme logement de rotule 26, tout en permettant dès mouvements de rotation du flexible 21 et de la rotule 26. La cage 28 est reliée par un ergot 29 au support de fixation 24.

La fixation de la partie intermédiaire 21c du flexible 21 sur la jambe 9 permet de limiter les mouvements du flexible 21. L'utilisation d'un moyen de fixation 25 de type rotule permet de libérer trois degrés de liberté de rotation.

Lors de mouvements de suspension et de direction d'une roue fixée sur la fusée 3, accompagnés de mouvements de rotation et de translation de la jambe 9, une fixation rigide de la portion intermédiaire 21c du flexible 21 sur la jambe 9 provoquerait la formation de contraintes internes dans le flexible 21, avec une concentration de contraintes à proximité de la fixation rigide sur la jambe 9. Grâce au moyen de fixation 25 libérant un ou plusieurs degrés de liberté, on assure le maintien de la portion intermédiaire 21c tout en limitant les contraintes internes concentrées dans la portion intermédiaire du flexible 21.

Les figures 4 et 5 illustrent une variante du dispositif de fixation des figures 2 et 3 dont les références aux éléments semblables ont été reprises. Le moyen de fixation 25 comprend une cage tubulaire 30 fixée sur le support 24 représenté partiellement. Un manchon 31, fixé dans la cage 30, comprend un alésage 32 destiné au passage du flexible 21. Le manchon 31 possède une paroi pourvue de trous longitudinaux 33 s'étendant entre les faces d'extrémité radiales 36, 37 du manchon 31.

Le manchon 31 est fabriqué à partir d'un matériau souple, de façon que le flexible 21 est maintenu par rapport à la cage 30 avec des degrés de liberté. Le manchon 31 permet la rotation du flexible 21. Par ailleurs, la fixation du flexible 21 dans le manchon 31 peut être adaptée pour permettre une translation dans une certaine mesure du flexible 21 par rapport au manchon 31, par glissement.

La paroi pourvue de trous longitudinaux 33 permet de conférer une certaine souplesse au manchon 31. Le manchon 31 est ainsi formé par une paroi cylindrique intérieure 31a reliée à une paroi cylindrique 31b extérieure par des parois radiales 31c qui permettent par déformation élastique notamment localisée dans les parois radiales 31c des mouvements de la paroi intérieure 31a liée au flexible 21 par rapport à la paroi extérieure 31b fixée dans la cage 30.

Bien entendu, un manchon 31 dépourvu de trous longitudinaux 33, et possédant une souplesse suffisante peut convenir. On peut également envisager d'autres modes de réalisation du manchon 31.

Les figures 6 et 7 illustrent une seconde variante du dispositif de fixation 22. Le manchon 31 est remplacé par une liaison 36 possédant une paroi extérieure fixée sur une surface intérieure de la cage tubulaire 30, et pourvue de projections radiales 35 s'étendant vers l'intérieur en direction du flexible 21, jusqu'à venir à proximité ou en contact avec le flexible 21.

Les projections radiales 35 permettent de maintenir la portion intermédiaire du flexible 21 dans une position centrale de la cage 30. Les extrémités 35a des projections 35 sont suffisamment proches pour permettre le maintien du flexible 21. Les projections 35 sont élastiques pour permettre un maintien suffisant du flexible 21 pour limiter ses mouvements, mais avec des degrés de liberté pour éviter une concentration des contraintes dans la portion intermédiaire 21c du flexible 21.

Bien entendu, tout moyen de fixation autre que ceux décrits ci-dessus et permettant une fixation du flexible 21 avec un ou plusieurs degrés de libertés en translation ou en rotation peut convenir.

Grâce à l'invention, on obtient un dispositif de fixation d'un flexible entre deux éléments mobiles permettant de limiter les mouvements du flexible et d'éviter des phénomènes de concentration de contraintes dans des portions proches de fixations du flexible, afin de prévenir une usure rapide du flexible.

## Revendications

1. Dispositif de fixation (22) d'un flexible (21) entre des premier et second éléments (1, 8) mobiles l'un par rapport à l'autre, une première extrémité (21a) du flexible (21) étant solidaire du premier élément (20) et une seconde extrémité (21b) du flexible (21) étant solidaire du second élément (8), **caractérisé par le fait qu'**il comprend un support de fixation (24) du dispositif sur le premier élément (1) et un moyen de fixation souple d'une portion intermédiaire (21c) du flexible (21) sur le premier élément (1), porté par le support (24) et possédant au moins un degré de liberté.

2. Dispositif selon la revendication 1, **caractérisé par le fait que** le moyen de fixation (28, 31, 34) permet une rotation du flexible (21) par rapport au dispositif de fixation (22) selon au moins un axe de rotation.

3. Dispositif selon l'une quelconque des revendications 1 ou 2, **caractérisé par le fait que** le moyen de fixation est du type rotule.

4. Dispositif selon la revendication 3, **caractérisé par le fait que** le moyen de fixation comprend une rotule (26) moulée sur le flexible et un logement de rotule (28).

5. Dispositif selon l'une quelconque des revendications 1 à 3, **caractérisé par le fait que** le moyen de fixation comprend une cage tubulaire (30) et un manchon souple (31) fixé dans la cage (30) et adapté pour maintenir une portion intermédiaire (21c) du flexible (21) de façon souple dans une position sensiblement centrale de la cage tubulaire (30), tout en autorisant des mouvements de translation et de rotation du flexible par rapport à la cage.

6. Dispositif selon la revendication 5, **caractérisé par le fait que** le manchon (31) comprend une paroi pourvue de trous longitudinaux (33).

7. Dispositif selon l'une quelconque des revendications 1 à 4, **caractérisé par le fait que** le moyen de fixation comprend une cage tubulaire (30) et une pluralité de projections radiales (35) élastiques s'étendant vers l'intérieur à partir de la cage (30) vers le flexible (21) et adaptés pour maintenir une portion intermédiaire (21c) de ce dernier de façon souple dans une position sensiblement centrale de la cage tubulaire (30), tout en autorisant des mouvements de translation et de rotation du flexible (21) par rapport à la cage.

8. Dispositif selon l'une quelconque des revendications 1 à 7, **caractérisé par le fait que** le support de fixation est un collier de serrage (24) sur le premier élément.

9. Système de suspension d'une roue sur le châssis d'un véhicule automobile, comprenant un combiné ressort/amortisseur disposé entre la roue et le châssis (8) dudit véhicule, un organe de freinage (7) de la roue alimenté en liquide de freinage par l'intermédiaire d'un flexible (21) dont une première extrémité (21a) est solidaire de l'organe de freinage (7), une seconde extrémité étant solidaire du châssis (8) du véhicule, **caractérisé par le fait qu'**il comprend un dispositif de fixation (22) d'une portion intermédiaire du flexible (21c) selon l'une quelconque des revendications précédentes.
